(19) Europäisches Patentamt / European Patent Office / Office européen des brevets

(11) **EP 3 918 472 B1**

(12) **EUROPEAN PATENT SPECIFICATION**

(45) Date of publication and mention of the grant of the patent:
**27.03.2024 Bulletin 2024/13**

(21) Application number: **19913566.6**

(22) Date of filing: **28.01.2019**

(51) International Patent Classification (IPC):
**G06F 8/41** *(2018.01)*    **G06N 3/045** *(2023.01)*
**G06N 3/10** *(2006.01)*    **G06N 5/01** *(2023.01)*
**G06N 3/082** *(2023.01)*    **G06N 3/044** *(2023.01)*

(52) Cooperative Patent Classification (CPC):
**G06F 8/443; G06N 3/045; G06N 3/105; G06N 5/01;**
G06N 3/044; G06N 3/082

(86) International application number:
**PCT/CN2019/073331**

(87) International publication number:
**WO 2020/154830 (06.08.2020 Gazette 2020/32)**

(54) **TECHNIQUES TO DETECT FUSIBLE OPERATORS WITH MACHINE LEARNING**

TECHNIKEN ZUR ERKENNUNG FUSIONIERBARER OPERATOREN MIT MASCHINENLERNEN

TECHNIQUES DE DÉTECTION D'OPÉRATEURS APTES À LA FUSION À L'AIDE D'UN APPRENTISSAGE AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.12.2021 Bulletin 2021/49**

(73) Proprietor: **INTEL Corporation
Santa Clara, CA 95054 (US)**

(72) Inventors:
- **YAO, Weifeng**
  **Shanghai 200241 (CN)**
- **HU, Xiao**
  **Shanghai 200241 (CN)**
- **MA, Hongpeng**
  **Shanghai 200235 (CN)**
- **LIU, Yanan**
  **Shanghai 201318 (CN)**
- **ZHOU, Huan, H.**
  **Shanghai 200240 (CN)**
- **YU, Xiaokun**
  **Shanghai 200240 (CN)**
- **LU, Zijie**
  **Shanghai 200441 (CN)**

(74) Representative: **Goddar, Heinz J. et al
Boehmert & Boehmert
Anwaltspartnerschaft mbB
Pettenkoferstrasse 22
80336 München (DE)**

(56) References cited:
**CN-A- 107 168 952**    **CN-A- 107 368 468**
**US-A1- 2006 095 722**    **US-A1- 2017 177 312**

- **TIANQI CHEN ET AL: "TVM: An Automated End-to-End Optimizing Compiler for Deep Learning", ARXIV.ORG:1802.04799V3, [Online] 5 October 2018 (2018-10-05), pages 1-16, XP081420453, Cornell University Library, 201 OLIN Library Cornell University, ITHACA, NY 14853**
- **LI FENGQIAN ET AL: "Feature Mining for Machine Learning Based Compilation Optimization", 2014 EIGHTH INTERNATIONAL CONFERENCE ON INNOVATIVE MOBILE AND INTERNET SERVICES IN UBIQUITOUS COMPUTING, IEEE, 2 July 2014 (2014-07-02), pages 207-214, XP032697354, DOI: 10.1109/IMIS.2014.26 [retrieved on 2014-12-04]**

**(Cont. next page)**

- **MATTHIAS BOEHM ET AL: "On optimizing operator fusion plans for large-scale machine learning in systemML", PROCEEDINGS OF THE VLDB ENDOWMENT; [ACM DIGITAL LIBRARY], ASSOC. OF COMPUTING MACHINERY, NEW YORK, NY, vol. 11, no. 12, 1 August 2018 (2018-08-01), pages 1755-1768, XP058416374, ISSN: 2150-8097, DOI: 10.14778/3229863.3229865**

**Description**

**BACKGROUND**

Machine learning includes the study and construction of algorithms that can learn from and make predictions on data. Deep neural networks may implement algorithms to perform a type of machine learning referred to as deep learning. Typically, deep learning may utilize a cascade of many layers of artificial neurons, or operators, such as nonlinear processing units. Frequently, each successive layer, or operator, uses the output of the previous layer as input. Collectively, the artificial neurons may perform feature extraction and transformation with deep learning algorithms. Deep learning may include supervised and unsupervised algorithms. Generally, unsupervised algorithms are used for pattern analysis and supervised algorithms are used for pattern classification.

LI FENGQIAN ET AL, "Feature Mining for Machine Learning Based Compilation Optimization", 2014 EIGHTH INTERNATIONAL CONFERENCE ON INNOVATIVE MOBILE AND INTERNET SERVICES IN UBIQUITOUS COMPUTING, IEEE, (20140702), doi:10.1109/IMIS.2014.26, relates to machine learning based compilation optimization especially on feature processing which is important for machine learning methods.

MATTHIAS BOEHM ET AL, "On optimizing operator fusion plans for large-scale machine learning in system ML", PROCEEDINGS OF THE VLDB ENDOWMENT; [ACM DIGITAL LIBRARY], ASSOC. OF COMPUTING MACHINERY, NEW YORK, NY, (20180801), vol. 11, no. 12, doi:10.14778/3229863.3229865, ISSN 2150-8097, discloses techniques for candidate exploration and selection of fusion plans, as well as code generation of local and distributed operations over dense, sparse, and compressed data.

TIANQI CHEN ET AL, "TVM: An Automated End-to-End Optimizing Compiler for Deep Learning", ARXIV.ORG:1802.04799V3, Cornell University Library, 201 OLIN Library Cornell University, ITHACA, NY 14853, (20181005) discloses an end-to-end compilation stack to solve fundamental optimization challenges for deep learning across a diverse set of hardware back-ends.

**SUMMARY**

The present invention is defined by the appended set of claims. Preferred embodiments are defined by the dependent claims.

**BRIEF DESCRIPTION OF THE DRAWINGS**

FIG. 1 illustrates exemplary aspects of an operating environment for a fusible operator detector (FOD) according to one or more embodiments described herein.

FIG. 2 illustrates exemplary aspects of a process flow for operator fusion according to one or more embodiments described herein.

FIG. 3 illustrates exemplary aspects of a process flow for fusion candidate detection and evaluation according to one or more embodiments described herein.

FIG. 4 illustrates exemplary aspects of a process flow for classifier training according to one or more embodiments described herein.

FIG. 5 illustrates exemplary aspects of output according to one or more embodiments described here.

FIG. 6 illustrates an embodiment of a logic flow according to one or more embodiments described herein.

FIG. 7 illustrates an embodiment of a storage medium according to one or more embodiments described herein.

**FIG. 8** illustrates an embodiment of a computing architecture according to one or more embodiments described herein.

**FIG. 9** illustrates an embodiment of a communications architecture according to one or more embodiments described herein.

**DETAILED DESCRIPTION**

Various embodiments are generally directed to techniques to detect fusible operators with machine learning, such as by evaluating a set of operators in a graph of a machine learning model to identify fusion candidates comprising subgraphs of the graph with two or more operators to combine, for instance. Some embodiments are particularly directed to utilizing a machine learning classifier to evaluate fusion candidates using a set of features of the fusion candidate. In one embodiment, for example, an apparatus may comprise a processor and a memory comprising instructions that when executed by the processor cause the processor to perform one or more of the following. In some embodiments, the processor may identify input comprising one or more machine learning models that each include a graph of operators. In various embodiments, the processor may mine the one or more machine learning models based on one or more operational parameters to determine one or more fusion candidates. In various such embodiments, each of the one or more fusion candidates may include a subgraph of at least one graph of operators corresponding to a machine learning model, and each subgraph may include two or more operators as candidates to combine. In many embodiments, the processor may extract a feature set from each of the one or more fusion candidates. In several embodiments, the processor may utilize a machine learning classifier to evaluate the one or more fusion candidates based on the feature sets extracted from each of the one or more fusion candidates. In some embodiments, the processor may provide, as output, a proposed candidate of the one or more fusion candidates to fuse based on evaluation of the one or more fusion candidates. These and other embodiments are described and claimed.

Some challenges facing machine learning include limited operational efficiencies, such as in deep neural network models. Such challenges may arise from an inability to accurately identify and combine operators, or layers, in machine learning models without extensive manual intervention. The need for manual intervention results in issues such as limited coverage, inconsistencies, and excessive lag. For example, humans can only find a small fraction of valuable fusible operators, resulting in a large number of fusible operators with higher frequency and heavier computation cost being missed. In another example, hand-crafted fusible operator detection relies heavily on the skillfulness of the developer and their understanding of the usage domain, leading to inconsistent performance. In yet another example, the deep learning industry is quickly evolving with new operators and operator combinations being continually developed, making it difficult or impossible for manual interventions to stay relevant. These and other factors may result is machine learning models with excessive overhead, limited applicability, and poor adaptability. Such limitations can drastically reduce the usability and performance of machine learning models, contributing to inefficient machine learning models.

Various embodiments described herein include a fusible operator detector (FOD), such as in an inference framework, to increase the efficiency of machine learning models. In various such embodiments, the FOD may analyze machine learning models that include machine learning topologies and/or graphs to identify fusible operators and/or fusible operator patterns (e.g., fusion candidates). Sometimes, the fusion candidates may be provided as output for use in further inference jobs and/or improved machine learning models. In many embodiments, the FOD may utilize data-driven and/or machine learning techniques to identify fusion candidates with better coverage and improved consistency than techniques that require extensive manual intervention. For instance, the FOD may efficiently and automatically identify two or more operators, or layers, in a deep neural network model to combine using a machine learning classifier.

Further, the FOD can find new fusible operators quickly and accurately to evolve with the evolution of topologies used in machine learning a while coping with the fast evolution of the machine learning industry. In these and other ways, components described here may identify methods to increase efficiency, decrease performance costs, decrease computational cost, and/or reduce resource requirements to implement machine learning models, in an accurate, robust, efficient, dynamic, and scalable manner, resulting in several technical effects and advantages over conventional computer technology, including increased capabilities and improved adaptability. In various embodiments, one or more of the components may be implemented in a practical application via one or more computing devices, and thereby provide additional and useful functionality to the one or more computing devices, resulting in more capable, better functioning, and improved computing devices. In many embodiments, one or more aspects of fusible operator detection described herein may be implemented via familiar, user-friendly interface objects.

In several embodiments, components described herein may provide specific and particular manners of automatically detecting and/or evaluating the fusibility of two or more operators in a machine learning model. In many embodiments, one or more of the components described herein may be implemented as a set of rules that improve computer-related technology by allowing a function not previously performable by a computer that enables an improved technological result to be achieved. For example, the function allowed may include automatic fusible operator detection and/or evaluation in machine learning models. In some examples, the function allowed may include fusible operator detection and/or evaluation in machine learning models using machine learning classifiers. In numerous examples, the function allowed may include fusible operator detection and/or evaluation in machine learning models using a set of features extracted from fusion candidates. In many examples, the function allowed may include providing a set of features extracted from a fusion candidate as input to a machine learning classifier to evaluate the fusion candidate.

With general reference to notations and nomenclature used herein, one or more portions of the detailed description which follows may be presented in terms of program procedures executed on a computer or network of computers. These procedural descriptions and representations are used by those skilled in the art to most effectively convey the substances of their work to others skilled in the art. A procedure is here, and generally, conceived to be a self-consistent sequence of operations leading to a desired result. These operations are those requiring physical manipulations of physical quantities. Usually, though not necessarily, these quantities take the form of electrical, magnetic, or optical signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to those quantities.

Further, these manipulations are often referred to in terms, such as adding or comparing, which are commonly associated with mental operations performed by a human operator. However, no such capability of a human operator is necessary, or desirable in most cases, in any of the operations described herein that form part of one or more embodiments. Rather, these operations are machine operations. Useful machines for performing operations of various embodiments include general purpose digital computers as selectively activated or configured by a computer program stored within that is written in accordance with the teachings herein, and/or include apparatus specially constructed for the required purpose. Various embodiments also relate to apparatus or systems for performing these operations. These apparatuses may be specially constructed for the required purpose or may include a general-purpose computer. The required structure for a variety of these machines will be apparent from the description given.

Reference is now made to the drawings, wherein like reference numerals are used to refer to like elements throughout. In the following description, for purpose of explanation, numerous specific details are set forth in order to provide a thorough understanding thereof. It may be evident, however, that the novel embodiments can be practiced without these specific details. In other instances, well known structures and devices are shown in block diagram form to facilitate a description thereof. The intention is to cover all modification and alternatives within the scope of the claims.

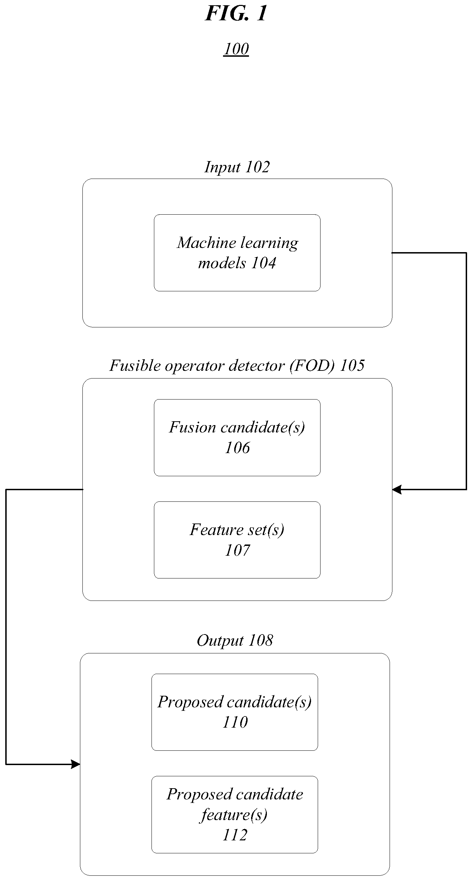

**FIG. 1** illustrates exemplary aspects of an operating environment 100 for a fusible operator detector (FOD) 105 according to one or more embodiments described herein. In operating environment 100, FOD 105 may include one or more fusion candidates 106 and one or more feature sets 107. In addition to FOD 105, operating environment 100 may include input 102 with one or more machine learning models 104 and output 108 with one or more proposed candidates 110 and one or more proposed candidate evaluations 112. In many embodiments, FOD 105 may detect the one or more fusion candidates 106 by mining machine learning models 104. In many such embodiments, FOD 105 may evaluate the one or more fusion candidates 107 based on the one or more feature sets 107. In one or more embodiments described herein, a machine learning classifier, such as a recurrent neural network, may be utilized to evaluate fusion candidates 106 based on feature sets 107. In some embodiments, FOD 105 may provide one or more proposed candidates 110 to fuse and/or one or more proposed candidate evaluations 112 as output 108. Embodiments are not limited in this context.

In some embodiments, FOD 105 may include an automatic fusible operator detection module integrated into an inference framework. Accordingly, in various embodiments described herein, an inference frame work may include one or more of fusible operator detection, construction of a fused topology, and make inferences with the fused topology. In many embodiments, FOD 105 may analyze the machine learning models 104 provided in input 102. In various embodiments, machine learning models 104 may include one or more graphs of topologies of machine learning models. In many embodiments, each graph includes a set of operators. For example, machine learning models 104 may include a deep learning model and the operators may correspond to layers in the deep learning model.

In various embodiments, FOD 105 may identify and/or evaluate operators in a machine learning model to fuse, or combine, them to improve the efficiency with which future machine learning inference workloads can be performed. For example, FOD 105 may identify opportunities to combine multiple adjacent operators into a single operator to save memory traffic and/or leverage potential mathematical compounding opportunities. With better efficiency, an improved user experience may be provided to more users at reduced performance and/or computational cost. In some embodiments, computational, or computation, costs may refer to costs while doing a job, such as how much time and power the computation costs. In several embodiments, deep learning inference may include a process where new data is fed into one or more pre-trained deep neural network models for classification. For example, a photo may be fed into a deep learning model that classifies people in the photo.

As will be described in more detail below, in one or more embodiments, FOD 105 may include, or implement, a fusion candidate selection stage and a fusion candidate filtering stage. In several embodiments, the fusion candidate selection stage may include mining the fusion candidates, or fusible operators candidates, with a metric designed to factor both frequency and computation cost. In many embodiments, the fusion candidate filtering stage may include extracting feature sets 107 from the fusion candidates. In many such embodiments, the fusion candidate filtering stage may include evaluating fusibility of one or more of the fusion candidates 106 based on the feature sets 107 with a machine learning classifier, such as a recurrent neural network (RNN). In various embodiments, operator fusion may be utilized to improve deep learning inference computational efficiency across multiple platforms.

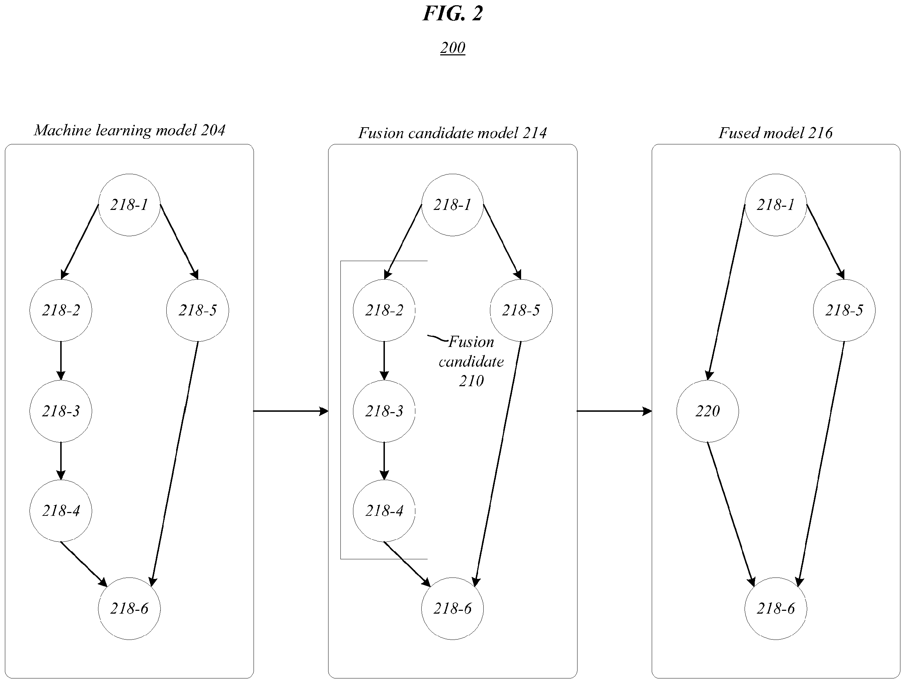

**FIG. 2** illustrates exemplary aspects of a process flow 200 for operator fusion according to one or more embodiments described herein. Process flow 200 may include machine learning model 204, fusion candidate model 214, and fused model 216. In various embodiments, process flow 200 may illustrate generation of fused model 216 from machine learning model 204. In several embodiments, one or more components described herein may implement one or more aspects of process flow 200. In many embodiments, machine learning model 204 may include a graph of operators 218-1, 218-2, 218-3, 218-4, 218-5, 218-6 (or graph of operators 218). In some embodiments, fusion candidate model 214 may include the graph of operators 218 with a fusion candidate 210 identified. As depicted in the illustrated embodiment, the fusion candidate 210 is typically a subgraph of the graph of operators 218. In several embodiments, fused model 216 may include a graph of operators with the fusion candidate replaced with a combined operator 220.

Accordingly, fused model 216 includes operators 218-1, 218-5, 218-6 in addition to combined operator 220. Embodiments are not limited in this context.

In one or more embodiments described herein, fusion candidate 210 may be detected and/or evaluated. For instance, the machine learning model 204 may be mined based one or more operational parameters, such as frequency of use and/or computational cost. In various embodiments, FOD 105 may identify and/or evaluate operators in machine learning model 204 to fuse, or combine, them to improve the efficiency with which future machine learning inference workloads can be performed. For example, operators 218-2, 218-3, 218-4 of fusion candidate 210 may be integrated to produce combined operator 220. In one or more embodiments, machine learning model 204, fusion candidate model 214, and fused model 216 may include deep neural network (DNN) models. In several embodiments, each of the operators 218, 220 may comprise a layer in the DNN.

In several embodiments, fusion candidate 210 may provide an opportunity for operator fusion. In many embodiments, operator fusion may include combining multiple adjacent operators (e.g., operators 218-2, 218-3, 218-4) into a single operator (e.g., combined operator 220). In various embodiments, one or more aspects of operator fusion described herein may save memory traffic and/or leverage potential mathematical compounding opportunities via fused model 216. With better efficiency, an improved user experience may be provided to more users at a reduced cost. In several embodiments, deep learning inference may include a process where new data is fed into one or more pre-trained deep neural network models for classification. For example, a photo may be fed into a deep learning model that classifies people in the photo.

Various embodiments described herein may implement one or more of the following operations, procedures, settings, and/or configurations. For example, such embodiments may include an apparatus comprising a processor and a memory comprising instructions that when executed by the processor cause the processor to implement one or more of the following operations, procedures, settings, and/or configurations. Some embodiments may identify input comprising one or more machine learning models that each include a graph of operators. Many embodiments may mine the one or more machine learning models based on one or more operational parameters to determine one or more fusion candidates, each of the one or more fusion candidates comprising a subgraph of at least one graph of operators, wherein each subgraph includes two or more operators. One or more embodiments may extract a feature set from each of the one or more fusion candidates.

Some embodiments may utilize a machine learning classifier to evaluate the one or more fusion candidates based on the feature sets extracted from each of the one or more fusion candidates. Several embodiments may provide, as output, a proposed candidate of the one or more fusion candidates to fuse based on evaluation of the one or more fusion candidates. In many embodiments, the machine learning classifier may implement a machine learning algorithm to identify patterns in fusible operators. In many such embodiments, the patterns in fusible operators may be used to increase the efficiency of future machine learning models, such as by fusing operators based on the pattern.

One or more embodiments may combine each operator in the subgraph of the proposed candidate to fuse the proposed candidate into a fused candidate. One or more such embodiments may evaluate computational efficiency of a first machine learning model with the proposed candidate and a second machine learning model with the fused candidate to validate the proposed candidate. Many embodiments may utilize compiler stacks to evaluate computational efficiency of the first and second machine learning models. Various embodiments may utilize a tensor virtual machine (TVM) to evaluate computational efficiency of the first and second machine learning models. In some embodiments the machine learning model may comprise a deep neural network (DNN) model and each operator includes a layer in the DNN model. In one or more embodiments, a layer may be the basic unit of a deep learning network. In one or more such embodiments, a layer may take data from a predecessor operator, transform the data according to specified parameters, and output the transformed data to the next operator.

Many embodiments may rank each of the one or more fusion candidates based on the feature sets to identify the proposed candidate. In some embodiments, a confidence score of a machine learning classifier may be used to rank each of the one or more fusion candidates. In several embodiments the feature set may include the one or more operational parameters. In various embodiments, the one or more operational parameters may include one or more of a frequency of utilization, a computational cost, and a memory cost.

One or more embodiments may utilize weighted frequent subgraph mining to mine the one or more machine learning models based on the one or more operational parameters to determine the one or more fusion candidates. One or more such embodiments may generate an edge weight metric based on the one or more operational parameters to mine the one or more machine learning models.

Each feature set includes one or more core features and one or more uncore features. The core features comprise one or more of instructions retired, elapsed core clock ticks, core frequency, L2 cache hits and misses, and L3 cache hits and misses. The uncore features comprise one or more of read bytes from memory controllers, bytes written to memory controllers, and data traffic transferred via interconnect links.

Some embodiments may utilize a performance counter monitor (PCM) to extract the feature sets. In several embodiments, each feature set may include indications of one or more of data movement patterns, computation patterns, system resource utilization, frequency, computation cost, and memory cost. In many embodiments, the machine learning classifier may comprise a recurrent neural network (RNN). Various such embodiments may map the feature sets to vectors corresponding to fusibility. Some such embodiments may compute a probability that each fusion candidate is fusible with the vectors corresponding to fusibility.

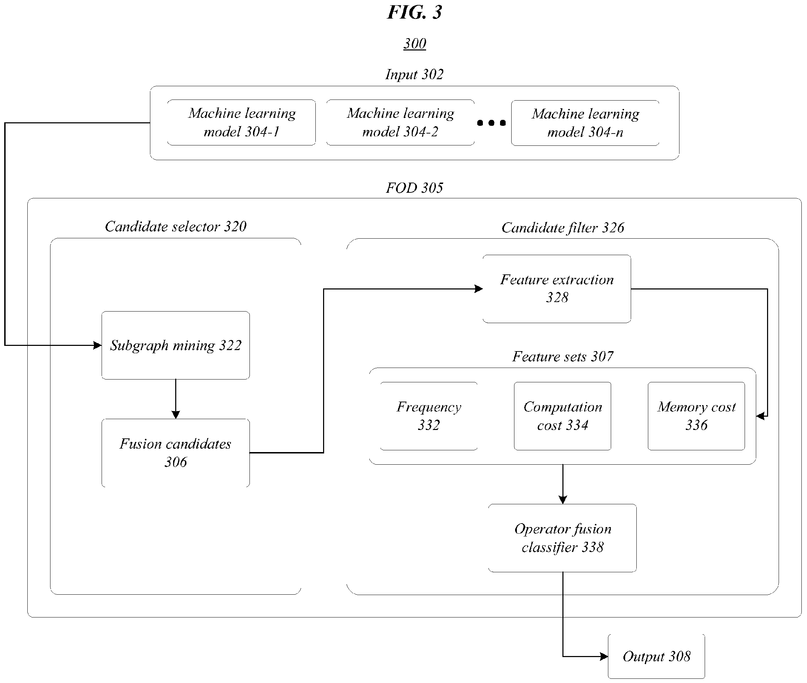

**FIG. 3** illustrates exemplary aspects of a process flow 300 for fusion candidate detection and evaluation according to one or more embodiments described herein. In various embodiments, one or more features and/or components of operating environment 100 may be the same or similar to one or more features and/or components of process flow 300. Process flow 300 may include input 302 with one or more machine learning models 304-1, 304-2, 304-n (or machine learning models 304), FOD 305 with candidate selector 320 and candidate filter 326, and output 308. In the illustrated embodiment, candidate selector 320 may include subgraph mining 322 and fusion candidates 324 and candidate filter 326 may include feature extraction 328, features 330 with frequency 332, computation cost 334, and memory cost 336, and operator fusion classifier 338. In one or more embodiments described herein, candidate selector 320 may implement a fusion candidate selection stage and candidate filter 326 may implement a fusion candidate filtering stage. Embodiments are not limited in this context.

In many embodiments, FOD 305 may include, or implement, the fusion candidate selection stage with candidate selector 320 to identify one or more fusion candidates 306 based on the one or more machine learning models 304 in input 302. In several embodiments, the fusion candidate selection stage may include subgraph mining 322 of input 304 to identify the fusion candidates 306. In some embodiments, subgraph mining 322 may be performed based on one or more operational parameters such as frequency and computation cost. In some such embodiments, the one or more operational parameters may include a metric designed to factor both frequency and computation cost. In various embodiments, the one or more fusion candidates 306 may be provided to candidate filter 326 for feature extraction 328.

In some embodiments, candidate selector 320 may perform one or more of the following, such as during the fusion candidate selection stage. Candidate selector 320 may continually collect online machine learning models that serve deep learning inference workloads. In various embodiments, the topologies of each workload may be modeled as directed graphs. In several embodiments, the fusible operator candidate selection procedure may be modeled as a weighted frequent subgraph mining problem. In several such embodiments, the GraMi algorithm may be utilized to solve the weighted frequent subgraph mining problem. Psuedo code for the fusible operator candidate selection procedure may include one or more portions below:

```
CandidateSelection(models):
        DAG ← Combine all models into one DAG
        // Compute frequency of all subgraphs
        // Only focus on subgraph with a size smaller than 6
        frequency, subgraphs ← GraMi(DAG, maxSize=5)
        costs ← empty list to store computation cost of subgraphs
        freqCosts ← empty list to store product of frequency and cost
        for subgraph in subgraphs:
                cost ← summing computation cost of all operators
                append cost to costs
                freqCost ← frequency x cost
                append freqCost to freqCosts
        weight ← empty list to store weight value of subgraphs
        for subgraph in sungraphs:
                normFreq ← min-max normalize frequency of the subgraph
                normCost ← min-max normalize cost of the subgraph
                normFreqCost ← min-max normalize freqCost of the subgraph
                weight ← normFreq + normCost + normFreqCost
                append weight to weights
        subgraphs ← rank subgraphs by weight
```

In various embodiments, an edge weight metric may be used to avoid difficult cases, such as a frequent subgraph with trivial computation costs or a rare subgraph with excessive computation cost. In many embodiments, the weight metric may take one or more of frequency, computation cost, and memory cost into account. In some embodiments, for every subgraph, g, the total computation cost may be computed. In some such embodiments, the total computation cost of a subgraph may be determined by summing the cost of every operator, as shown in Equation (1):

$$cost(g) = \sum_{op \in g} cost(op) \qquad (1)$$

In one or more embodiments, in addition to frequency and cost, the product of frequency and computation cost of every subgraph as another operational parameter, as shown in Equation (2):

$$freqCost(g) = freq(g) \cdot cost(g) \qquad (2)$$

In some embodiments, a min max normalization technique may be utilized to ensure scaling of the operational parameters are consistent. Accordingly, a given operational parameter, f, of a subgraph, g, may be normalized with respect to the original graph, G, as shown in Equation (3):

$$normf_G(g) = \frac{f_G(g) - min_{g' \in G}(f_G(g'))}{max_{g' \in G}(f_G(g')) - min_{g' \in G}(f_G(g'))} \qquad (3)$$

Further, in many embodiments, the normalized features may be combined as the weight of a subgraph, g, with respect to the original graph, G, as shown in Equation (4):

$$Weight(g|G) = normFreq_G(g) + normCost_G(g) + normFreqCost_G(g) \qquad (4)$$

In several embodiments, FOD 305 may include, or implement, the fusion candidate filtering stage based on one or more feature sets 307 extracted from fusion candidates 306 at feature extraction 328. In some embodiments, the feature sets 307 may include one or more of the operational parameters utilized during subgraph mining 322 to detect fusion candidates 306. In the illustrated embodiments, the feature sets 307 include frequency 332, computation cost 334, and memory cost 336. In some embodiments, feature sets 307 may include a set of features for each of fusion candidates 306.

In many embodiments, the fusion candidate filtering stage may include extracting feature sets 107 from the fusion candidates 306. In many such embodiments, the fusion candidate filtering stage may include evaluating fusibility of one or more of the fusion candidates 106 based on the feature sets 107 with an operator fusion classifier 338. In several embodiments, the operator fusion classifier 338 may include a machine learning classifier, such as a recurrent neural network (RNN).

In some embodiments, candidate filter 326 may perform one or more of the following, such as during the fusion candidate filtering stage. Candidate filter 326 may evaluate each of the fusion candidates 306 to determine fusibility. In various embodiments, determining fusibility may be implemented as a binary classification problem. For instance, feature sets 307 may be extracted from each fusion candidate at feature extraction 328. In such instances, a respective feature set may be provided to operator fusion classifier 338 to determine fusibility of a respective fusion candidate. As will be discussed in more detail below, in many embodiments, operator fusion classifier 338 may be trained as part of the fusion candidate filtering stage.

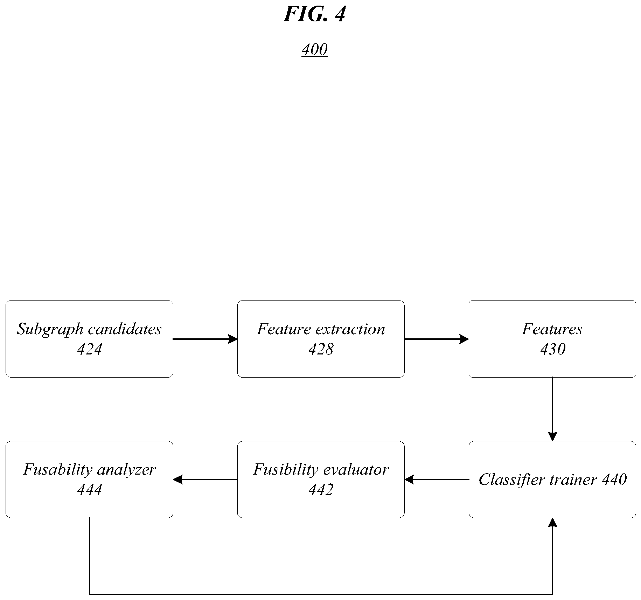

FIG. 4 illustrates exemplary aspects of a process flow 400 for classifier training according to one or more embodiments described herein. In various embodiments, one or more components and/or features of operating environment 100 and process flow 300 may be the same or similar to one or more components and/or features of process flow 400. Process flow 400 may include subgraph candidates 424, feature extraction 428, features 430, classifier trainer 440, fusibility evaluator 442, and fusibility analyzer 444. In one or more embodiments, process flow 400 may be comprised in and/or utilized by the fusion candidate filtering stage. In many embodiments, process flow 400 may train/generate a recurrent neural network (RNN) classifier that automatically classifies operators as fusible or non-fusible. Embodiments are not limited in this context.

In many embodiments, for each fusion candidate (e.g., subgraph candidates 424), one or more types of features may be extracted. In some embodiments, data movement patterns and computation patterns may be extracted from machine code, as features 430. In one or more embodiments, system resources utilization may be extracted, as features 430. In various embodiments, machine code may include a collection of machine instructions utilized to realize specified functionalities. In some embodiments, machine code may be generated from compilers and/or hand-written by programmers.

In several embodiments, how a CPU and/or memory are utilized when executing the operators can indicate their fusibility. In various embodiments described herein, performance counter monitor (PCM) may be utilized to extract features 430. Each feature set includes one or more core features and one or more uncore features. The core features comprise one or more of instructions retired, elapsed core clock ticks, core frequency, L2 cache hits and misses, and L3 cache hits and misses. The uncore features comprise one or more of read bytes from memory controllers, bytes written to memory controllers, and data traffic transferred via interconnect links.

In one or more embodiments, the features 430 may be input as time series data to an RNN model, such as at classifier trainer 440. In one or more such embodiments, inputting the features 430 as times series data may enable the RNN model to learn the underlying patterns of fusible operators. Generally, the RNN may map the extracted features to vectors that preserve information corresponding to the operator's fusibility. The resulting vectors may then be used to compute the probability that the operators are fusible. In one or more embodiments, techniques similar to those used in sentiment classification of natural language processing may be used. to learn the underlying patterns of fusible operators.

In various embodiments, a loose threshold may be initially chosen to bootstrap the training process due to lack of positive samples. Among the samples predicted as fusible (e.g., fusion candidates), fusibility may be validated, such as by comparing computational efficiency between the original operators and the optimized operators using compiler stacks, such as a deep learning stack, end-to-end deep learning stack, and/or a tensor virtual machine (TVM) that supports low-level optimization. In many embodiments, the true positive may be included in a training data set as positive samples. In several embodiments, this process may be iterated along the data growth. In some embodiments, the threshold may be gradually raised as the classification becomes more and more accurate.

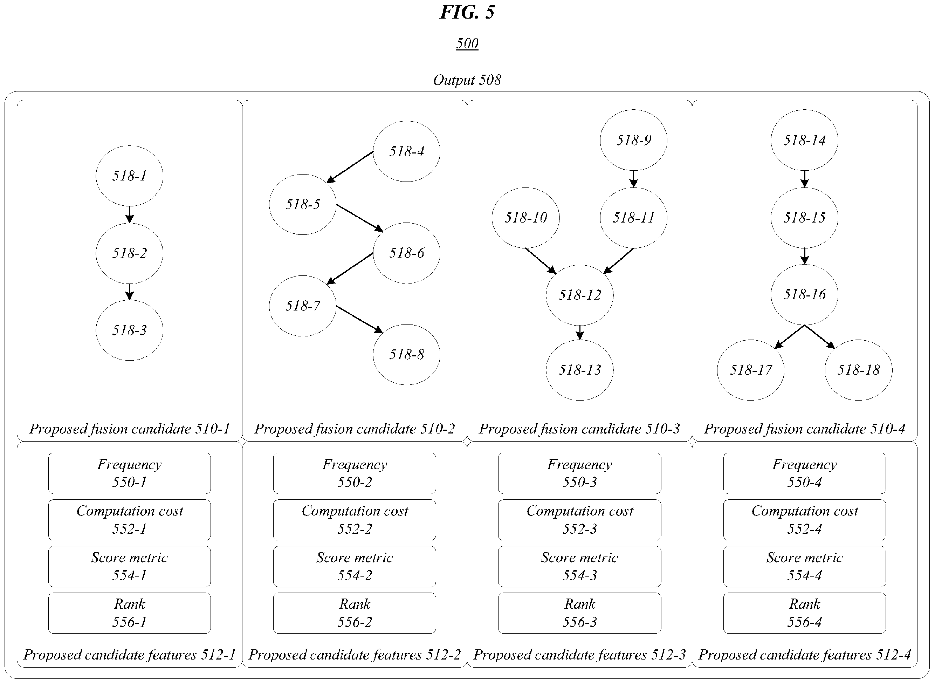

**FIG. 5** illustrates exemplary aspects of output in environment 500 according to one or more embodiments described herein. Environment 500 may include output 508 with proposed fusion candidates 510-1, 510-2, 510-3, 510-4 and proposed candidate features 512-1, 512-2, 512-3, 512-4. In the illustrated embodiment, each proposed fusion candidate 510 includes a subgraph of a graph of operators that correspond to a machine learning model. In one or more embodiments, output 508 may be generated based on evaluation of fusion candidates. For example, fusion candidates that satisfy a threshold metric may be included in output 508 as a proposed fusion candidate. Embodiments are not limited in this context.

In the illustrated embodiment, proposed fusion candidate 510-1 may include operators 518-1, 518-2, 518-3, proposed fusion candidate 510-2 may include operators 518-4, 518-5, 518-6, 518-7, 518-8, proposed fusion candidate 510-4 may include operators 518-9, 518-10, 518-11, 518-12, 518-13, and proposed fusion candidate 510-4 may include operators 518-14, 518-15, 518-16, 518-17, 518-18. In various embodiments, each proposed fusion candidate 510-1, 510-2, 510-3, 510-4 may correspond to a proposed candidate features 512-1, 512-2, 512-3, 512-4. In various such embodiments, proposed candidate features 512-1, 512-2, 512-3, 512-4 may include, respectively, frequency 550-1, 550-2, 550-3, 550-4, computation cost 552-1, 552-2, 552-3, 552-4, score metric 554-1, 554-2, 554-3, 554-4, and rank 556-1, 556-2, 556-3, 556-4. In some embodiments, proposed candidate features 512 may be utilized to rank each of the proposed fusion candidates 512. In various embodiments, score metric 554 may be generated based on one or more other proposed candidate features 556, such as frequency 550 and computation cost 552. In one or more embodiments, the proposed fusion candidates 510 may be ranked based on the score metric 554.

In some embodiments, output 508 may be based on one or more online cloud computing workloads. In some such embodiments, the one or more online cloud computing workloads may be collected based on one or more machine learning models, such as convolutional neural network (CNN) models. In various embodiments, the number of occurrences of each machine learning model may be set to a range. For example, the number of occurrences of every machine learning model may be limited to a number between 10 and 50. In one or more embodiments, output 508 may identify deep operator composition that have high frequency and/or heavy computation cost.

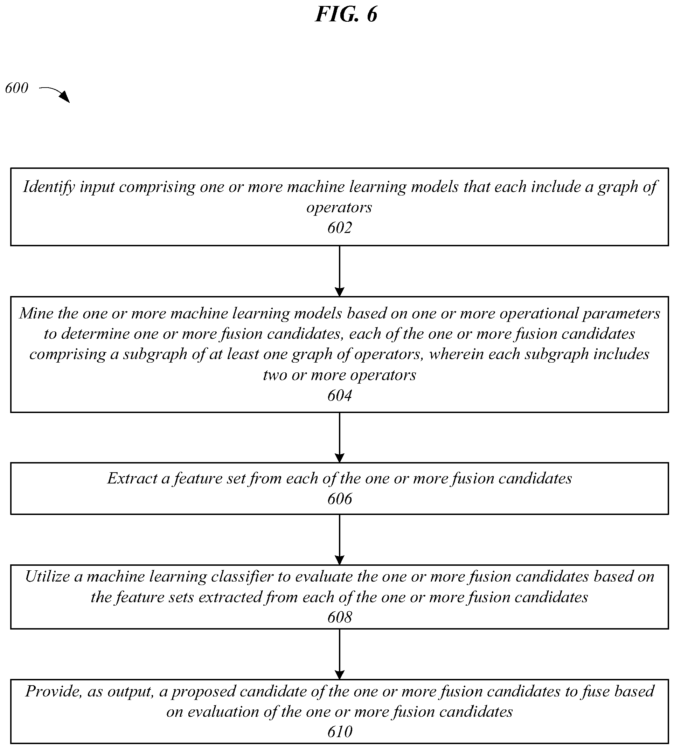

**FIG. 6** illustrates one embodiment of a logic flow 600, which may be representative of operations that may be executed in various embodiments in conjunction with techniques for fusible operator detection and/or evaluation. The logic flow 600 may be representative of some or all of the operations that may be executed by one or more components/devices/environments described herein, such as FOD 105. The embodiments are not limited in this context.

In the illustrated embodiments, logic flow 600 may begin at block 602. At block 602 "identify input comprising one or more machine learning models that each include a graph of operators" input including one or more machine learning models that each include a graph of operators is identified. For example, fusible operator detector (FOD) 105 may identify input 102 comprising one or more machine learning models 104. Continuing to block 604 "mine the one or more machine learning models based on one or more operational parameters to determine one or more fusion candidates, each of the one or more fusion candidates comprising a subgraph of at least one graph of operators, wherein each subgraph includes two or more operators" the one or more machine learning models is mined based on one or more operational parameters to determine one or more fusion candidates that each include a subgraph of at least one graph of operators with two or more operators. In some embodiments, FOD 105 may identify one or more fusion candidates 106 in machine learning models 104 based on one or more operational parameters. In various embodiments, the machine learning model 204 may be mined based one or more operational parameters, such as frequency of use and/or computational cost, to identify fusion candidate 210.

At block 606 "extract a feature set from each of the one or more fusion candidates" a feature set from each of the one or more fusion candidates is extracted. For example, candidate filter 326 of FOD 305 may extract feature sets 307 from each of the fusion candidates 306. Proceeding to block 608 "utilize a machine learning classifier to evaluate the one or more fusion candidates based on the feature sets extracted from each of the one or more fusion candidates" a machine learning classifier may be is utilized to evaluate the one or more fusion candidates based on the extracted feature sets. For instance, candidate filter 326 may utilize operator fusion classifier 338 to evaluate each of fusion candidates 306 based on the feature sets 307. At block 610 "provide, as output, a proposed candidate of the one or more fusion candidates to fuse based on evaluation of the one or more fusion candidates" output is provided that includes a proposed candidate of the one or more fusion candidates to fuse. For example, proposed fusion candidate 510-1 may be provided as output 508.

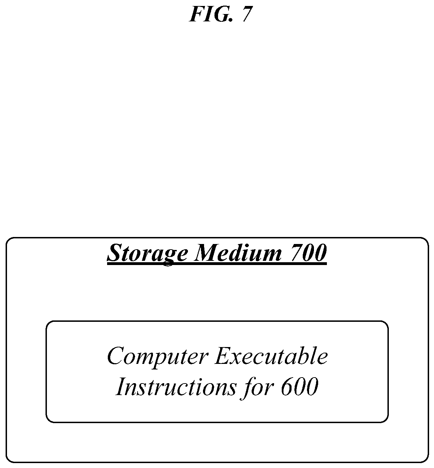

**FIG. 7** illustrates an embodiment of a storage medium 700. Storage medium 700 may comprise any non-transitory computer-readable storage medium or machine-readable storage medium, such as an optical, magnetic or semiconductor storage medium. In various embodiments, storage medium 700 may comprise an article of manufacture. In some embodiments, storage medium 700 may store computer-executable instructions, such as computer-executable instructions to implement one or more of logic flows or operations described herein, such as with respect to logic flow 600 of FIG. 6. Examples of a computer-readable storage medium or machine-readable storage medium may include any tangible media capable of storing electronic data, including volatile memory or non-volatile memory, removable or non-removable memory, erasable or non-erasable memory, writeable or re-writeable memory, and so forth. Examples of computer-executable instructions may include any suitable type of code, such as source code, compiled code, interpreted code, executable code, static code, dynamic code, object-oriented code, visual code, and the like. The embodiments are not limited in this context.

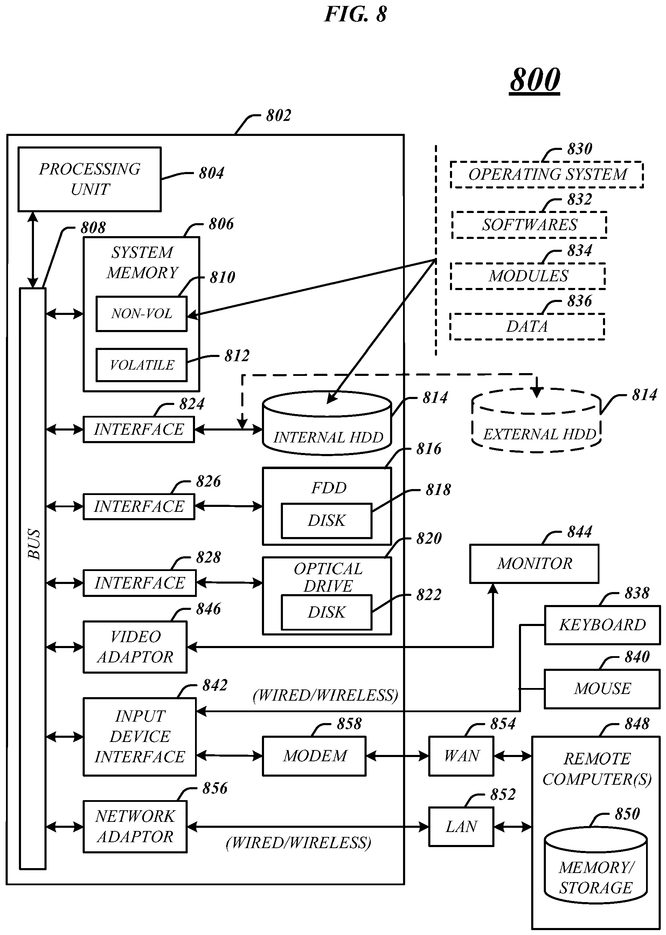

**FIG. 8** illustrates an embodiment of an exemplary computing architecture 800 that may be suitable for implementing various embodiments as previously described. In various embodiments, the computing architecture 800 may comprise or be implemented as part of an electronic device. In some embodiments, the computing architecture 800 may be representative, for example, of one or more component described herein. In some embodiments, computing architecture 800 may be representative, for example, of a computing device that implements or utilizes one or more portions of FOD 105 and/or one or more techniques described herein. The embodiments are not limited in this context.

As used in this application, the terms "system" and "component" and "module" are intended to refer to a computer-related entity, either hardware, a combination of hardware and software, software, or software in execution, examples of which are provided by the exemplary computing architecture 800. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the unidirectional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 800 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 800.

As shown in FIG. 8, the computing architecture 800 comprises a processing unit 804, a system memory 806 and a system bus 808. The processing unit 804 can be any of various commercially available processors, including without limitation an AMD® Athlon®, Duron® and Opteron® processors; ARM® application, embedded and secure processors; IBM® and Motorola® DragonBall® and PowerPC® processors; IBM and Sony® Cell processors; Intel® Celeron®, Core (2) Duo®, Itanium®, Pentium®, Xeon®, and XScale® processors; and similar processors. Dual microprocessors, multi-core processors, and other multi-processor architectures may also be employed as the processing unit 804.

The system bus 808 provides an interface for system components including, but not limited to, the system memory 806 to the processing unit 804. The system bus 808 can be any of several types of bus structure that may further interconnect to a memory bus (with or without a memory controller), a peripheral bus, and a local bus using any of a variety of commercially available bus architectures. Interface adapters may connect to the system bus 808 via a slot architecture. Example slot architectures may include without limitation Accelerated Graphics Port (AGP), Card Bus, (Extended) Industry Standard Architecture ((E)ISA), Micro Channel Architecture (MCA), NuBus, Peripheral Component Interconnect (Extended) (PCI(X)), PCI Express, Personal Computer Memory Card International Association (PCMCIA), and the like.

The system memory 806 may include various types of computer-readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory (e.g., one or more flash arrays), polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information. In the illustrated embodiment shown in FIG. 8, the system memory 806 can include non-volatile memory 810 and/or volatile memory 812. In some embodiments, system memory 806 may include main memory. A basic input/output system (BIOS) can be stored in the non-volatile memory 810.

The computer 802 may include various types of computer-readable storage media in the form of one or more lower speed memory units, including an internal (or external) hard disk drive (HDD) 814, a magnetic floppy disk drive (FDD) 816 to read from or write to a removable magnetic disk 818, and an optical disk drive 820 to read from or write to a removable optical disk 822 (e.g., a CD-ROM or DVD). The HDD 814, FDD 816 and optical disk drive 820 can be connected to the system bus 808 by a HDD interface 824, an FDD interface 826 and an optical drive interface 828, respectively. The HDD interface 824 for external drive implementations can include at least one or both of Universal Serial Bus (USB) and Institute of Electrical and Electronics Engineers (IEEE) 994 interface technologies. In various embodiments, these types of memory may not be included in main memory or system memory.

The drives and associated computer-readable media provide volatile and/or nonvolatile storage of data, data structures, computer-executable instructions, and so forth. For example, a number of program modules can be stored in the drives and memory units 810, 812, including an operating system 830, one or more application programs 832, other program modules 834, and program data 836. In one embodiment, the one or more application programs 832, other program modules 834, and program data 836 can include or implement, for example, the various techniques, applications, and/or components described herein.

A user can enter commands and information into the computer 802 through one or more wire/wireless input devices, for example, a keyboard 838 and a pointing device, such as a mouse 840. Other input devices may include microphones, infra-red (IR) remote controls, radio-frequency (RF) remote controls, game pads, stylus pens, card readers, dongles, finger print readers, gloves, graphics tablets, joysticks, keyboards, retina readers, touch screens (e.g., capacitive, resistive, etc.), trackballs, trackpads, sensors, styluses, and the like. These and other input devices are often connected to the processing unit 804 through an input device interface 842 that is coupled to the system bus 808, but can be connected by other interfaces such as a parallel port, IEEE 994 serial port, a game port, a USB port, an IR interface, and so forth.

A monitor 844 or other type of display device is also connected to the system bus 808 via an interface, such as a video adaptor 846. The monitor 844 may be internal or external to the computer 802. In addition to the monitor 844, a computer typically includes other peripheral output devices, such as speakers, printers, and so forth.

The computer 802 may operate in a networked environment using logical connections via wire and/or wireless communications to one or more remote computers, such as a remote computer 848. In various embodiments, one or more migrations may occur via the networked environment. The remote computer 848 can be a workstation, a server computer, a router, a personal computer, portable computer, microprocessor-based entertainment appliance, a peer device or other common network node, and typically includes many or all of the elements described relative to the computer 802, although, for purposes of brevity, only a memory/storage device 850 is illustrated. The logical connections depicted include wire/wireless connectivity to a local area network (LAN) 852 and/or larger networks, for example, a wide area network (WAN) 854. Such LAN and WAN networking environments are commonplace in offices and companies, and facilitate enterprise-wide computer networks, such as intranets, all of which may connect to a global communications network, for example, the Internet.

When used in a LAN networking environment, the computer 802 is connected to the LAN 852 through a wire and/or wireless communication network interface or adaptor 856. The adaptor 856 can facilitate wire and/or wireless communications to the LAN 852, which may also include a wireless access point disposed thereon for communicating with the wireless functionality of the adaptor 856.

When used in a WAN networking environment, the computer 802 can include a modem 858, or is connected to a communications server on the WAN 854, or has other means for establishing communications over the WAN 854, such as by way of the Internet. The modem 858, which can be internal or external and a wire and/or wireless device, connects to the system bus 808 via the input device interface 842. In a networked environment, program modules depicted relative to the computer 802, or portions thereof, can be stored in the remote memory/storage device 850. It will be appreciated that the network connections shown are exemplary and other means of establishing a communications link between the computers can be used.

The computer 802 is operable to communicate with wire and wireless devices or entities using the IEEE 802 family of standards, such as wireless devices operatively disposed in wireless communication (e.g., IEEE 802.16 over-the-air modulation techniques). This includes at least Wi-Fi (or Wireless Fidelity), WiMax, and Bluetooth™ wireless technologies, among others. Thus, the communication can be a predefined structure as with a conventional network or simply an ad hoc communication between at least two devices. Wi-Fi networks use radio technologies called IEEE 802.11x (a, b, g, n, etc.) to provide secure, reliable, fast wireless connectivity. A Wi-Fi network can be used to connect computers to each other, to the Internet, and to wire networks (which use IEEE 802.3-related media and functions).

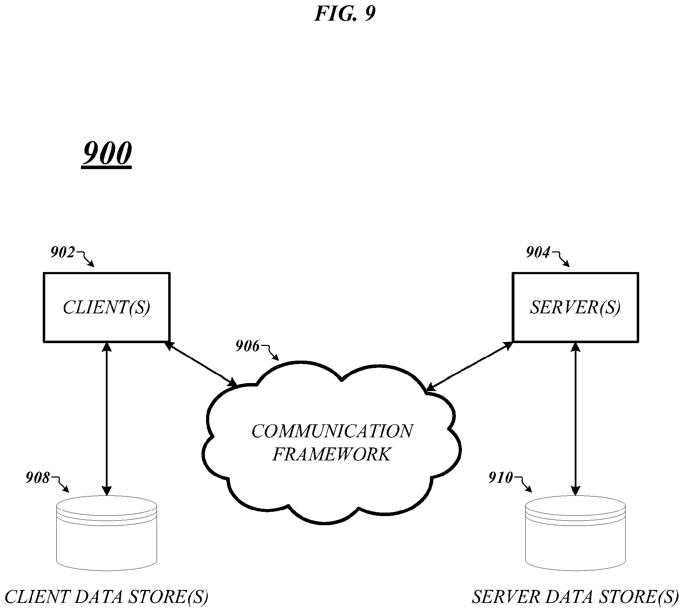

**FIG. 9** illustrates a block diagram of an exemplary communications architecture 900 suitable for implementing various embodiments as previously described, such as virtual machine migration. The communications architecture 900 includes various common communications elements, such as a transmitter, receiver, transceiver, radio, network interface, baseband processor, antenna, amplifiers, filters, power supplies, and so forth. The embodiments, however, are not limited to implementation by the communications architecture 900.

As shown in FIG. 9, the communications architecture 900 comprises includes one or more clients 902 and servers 904. In some embodiments communications architecture may include or implement one or more portions of components, applications, and/or techniques described herein. The clients 902 and the servers 904 are operatively connected to one or more respective client data stores 908 and server data stores 910 that can be employed to store information local to the respective clients 902 and servers 904, such as cookies and/or associated contextual information. In various embodiments, any one of servers 904 may implement one or more of logic flows or operations described herein, and storage medium 700 of FIG. 7 in conjunction with storage of data received from any one of clients 902 on any of server data stores 910. In one or more embodiments, one or more of client data store(s) 908 or server data store(s) 910 may include memory accessible to one or more portions of components, applications, and/or techniques described herein.

The clients 902 and the servers 904 may communicate information between each other using a communication framework 906. The communications framework 906 may implement any well-known communications techniques and protocols. The communications framework 906 may be implemented as a packet-switched network (e.g., public networks such as the Internet, private networks such as an enterprise intranet, and so forth), a circuit-switched network (e.g., the public switched telephone network), or a combination of a packet-switched network and a circuit-switched network (with suitable gateways and translators).

The communications framework 906 may implement various network interfaces arranged to accept, communicate, and connect to a communications network. A network interface may be regarded as a specialized form of an input output interface. Network interfaces may employ connection protocols including without limitation direct connect, Ethernet (e.g., thick, thin, twisted pair 10/100/1900 Base T, and the like), token ring, wireless network interfaces, cellular network interfaces, IEEE 802.11a-x network interfaces, IEEE 802.16 network interfaces, IEEE 802.20 network interfaces, and the like. Further, multiple network interfaces may be used to engage with various communications network types. For example, multiple network interfaces may be employed to allow for the communication over broadcast, multicast, and unicast networks. Should processing requirements dictate a greater amount speed and capacity, distributed network controller architectures may similarly be employed to pool, load balance, and otherwise increase the communicative bandwidth required by clients 902 and the servers 904. A communications network may be any one and the combination of wired and/or wireless networks including without limitation a direct interconnection, a secured custom connection, a private network (e.g., an enterprise intranet), a public network (e.g., the Internet), a Personal Area Network (PAN), a Local Area Network (LAN), a Metropolitan Area Network (MAN), an Operating Missions as Nodes on the Internet (OMNI), a Wide Area Network (WAN), a wireless network, a cellular network, and other communications networks.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor. Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

The foregoing description of example embodiments has been presented for the purposes of illustration and description. It is not intended to be exhaustive or to limit the present disclosure to the precise forms disclosed. Many modifications and variations are possible in light of this disclosure. It is intended that the scope of the present disclosure be limited not by this detailed description, but rather by the claims appended hereto. Future filed applications claiming priority to this application may claim the disclosed subject matter in a different manner, and may generally include any set of one or more limitations as variously disclosed or otherwise demonstrated herein.

## Claims

1. A computer-implemented method, comprising:

    identifying input (302) comprising one or more machine learning models (304) that each include a graph of operators;
    mining the one or more machine learning models (304) based on one or more operational parameters to determine one or more fusion candidates (306), each of the one or more fusion candidates (306) comprising a subgraph of at least one graph of operators, wherein each subgraph includes two or more operators, and wherein the one or more operational parameters include one or more of a frequency of utilization (332), a computational cost (334), and a memory cost (336);
    extracting a feature set (307) from each of the one or more fusion candidates (306);
    utilizing a machine learning classifier to evaluate the one or more fusion candidates (306) based on the feature sets (307) extracted from each of the one or more fusion candidates (306); and
    identifying a proposed candidate of the one or more fusion candidates (306) to fuse based on evaluation of the one or more fusion candidates (306),
    wherein each feature set (307) comprises one or more core features and one or more uncore features,
    wherein the one or more core features comprise one or more of instructions retired, elapsed core clock ticks, core frequency, L2 cache hits and misses, and L3 cache hits and misses, and
    wherein the one or more uncore features comprise one or more of read bytes from memory controllers, bytes written to memory controllers, and data traffic transferred via interconnect links.

2. The computer-implemented method of claim 1, comprising combining each operator in the subgraph of the proposed candidate to fuse the proposed candidate into a fused candidate.

3. The computer-implemented method of claim 2, comprising evaluating computational efficiency of a first machine learning model with the proposed candidate and a second machine learning model with the fused candidate to validate the proposed candidate.

4. The computer-implemented method of claim 3, comprising utilizing compiler stacks to evaluate computational efficiency of the first and second machine learning models.

5. The computer-implemented method of claim 3, comprising utilizing a tensor virtual machine, TVM, to evaluate computational efficiency of the first and second machine learning models.

6. The computer-implemented method of claim 1, the machine learning model comprising a deep neural network, DNN, model and each operator includes a layer in the DNN model.

7. The computer-implemented method of claim 1, comprising ranking each of the one or more fusion candidates (306) based on the feature sets (307) to identify the proposed candidate.

8. The computer-implemented method of claim 1, comprising utilizing weighted frequent subgraph mining to mine the one or more machine learning models (304) based on the one or more operational parameters to determine the one or more fusion candidates (306).

9. The computer-implemented method of claim 8, comprising generating an edge weight metric based on the one or more operational parameters to mine the one or more machine learning models (304).

10. An apparatus comprising means to perform a method as claimed in any of claims 1 to 9.

11. A machine-readable storage including machine-readable instructions, which when executed by a computer, causes the computer to implement the method in any of claims 1 to 9.

**Patentansprüche**

1. Computerimplementiertes Verfahren, das Folgendes umfasst:

   Identifizieren einer Eingabe (302), die ein oder mehrere Maschinenlernmodelle (304) umfasst, die jeweils einen Graphen von Operatoren beinhalten;
   Mining des einen oder der mehreren Maschinenlernmodelle (304) basierend auf einem oder mehreren Operationsparametern, um einen oder mehrere Fusionskandidaten (306) zu bestimmen, wobei jeder des einen oder der mehreren Fusionskandidaten (306) einen Subgraphen von wenigstens einem Graphen von Operatoren umfasst, wobei jeder Subgraph zwei oder mehr Operatoren beinhaltet, und wobei der eine oder die mehreren Operationsparameter eine Häufigkeit einer Nutzung (332), Rechenkosten (334) und/oder Speicherkosten (336) beinhalten;
   Extrahieren eines Merkmalsatzes (307) aus jedem des einen oder der mehreren Fusionskandidaten (306);
   Nutzen eines Maschinenlernklassifikators zum Auswerten des einen oder der mehreren Fusionskandidaten (306) basierend auf den Merkmalsätzen (307), die aus jedem des einen oder der mehreren Fusionskandidaten (306) extrahiert werden; und
   Identifizieren eines vorgeschlagenen Kandidaten des einen oder der mehreren Fusionskandidaten (306) zum Fusionieren basierend auf einer Auswertung des einen oder der mehreren Fusionskandidaten (306),
   wobei jeder Merkmalsatz (307) ein oder mehrere Kernmerkmale und ein oder mehrere Nichtkernmerkmale umfasst,
   wobei das eine oder die mehreren Kernmerkmale zurückgezogene Anweisungen, verstrichene Kerntakt-Ticks, Kernfrequenz, L2-Cache-Treffer und -Nichttreffer und/oder L3-Cache-Treffer und -Nichttreffer umfasst, und
   wobei das eine oder die mehreren Nichtkernmerkmale aus Speichersteuerungen gelesene Bytes, in Speichersteuerungen geschriebene Bytes und/oder über Interconnect-Links übertragenen Datenverkehr umfassen.

2. Computerimplementiertes Verfahren nach Anspruch 1, das Kombinieren jedes Operators in dem Subgraphen des vorgeschlagenen Kandidaten zum Fusionieren des vorgeschlagenen Kandidaten in einen fusionierten Kandidaten umfasst.

3. Computerimplementiertes Verfahren nach Anspruch 2, das Auswerten einer Recheneffizienz eines ersten Maschinenlernmodells mit dem vorgeschlagenen Kandidaten und eines zweiten Maschinenlernmodells mit dem fusionierten Kandidaten umfasst, um den vorgeschlagenen Kandidaten zu validieren.

4. Computerimplementiertes Verfahren nach Anspruch 3, das Nutzen von Compiler-Stapeln zum Auswerten einer Recheneffizienz des ersten und zweiten Maschinenlernmodells umfasst.

5. Computerimplementiertes Verfahren nach Anspruch 3, das Nutzen einer virtuellen Tensormaschine, TVM (Tensor Virtual Machine), zum Auswerten einer Recheneffizienz des ersten und zweiten Maschinenlernmodells umfasst.

6. Computerimplementiertes Verfahren nach Anspruch 1, wobei das Maschinenlernmodell ein Tiefes-neuronales-Netz- bzw. DNN(Deep Neural Network)-Modell umfasst und jeder Operation eine Schicht in dem DNN-Modell beinhaltet.

7. Computerimplementiertes Verfahren nach Anspruch 1, das Einstufen jedes des einen oder der mehreren Fusionskandidaten (306) basierend auf den Merkmalssätzen (307) zum Identifizieren des vorgeschlagenen Kandidaten umfasst.

8. Computerimplementiertes Verfahren nach Anspruch 1, das Nutzen von gewichtetem häufigen Subgraphen-Mining zum Mining des einen oder der mehreren Maschinenlernmodelle (304) basierend auf dem einen oder den mehreren Operationsparametern umfasst, um den einen oder die mehreren Fusionskandidaten (306) zu bestimmen.

9. Computerimplementiertes Verfahren nach Anspruch 8, das Erzeugen einer Kantengewichtsmetrik basierend auf dem einen oder den mehreren Operationsparametern zum Mining des einen oder der mehreren Maschinenlernmodelle (304) umfasst.

10. Einrichtung, die ein Mittel zum Durchführen eines Verfahrens nach einem der Ansprüche 1 bis 9 umfasst.

11. Maschinenlesbare Speicherung, die maschinenlesbare Anweisungen beinhaltet, die bei Ausführung durch einen Computer den Computer zum Implementieren des Verfahrens nach einem der Ansprüche 1 bis 9 veranlassen.

**Revendications**

1. Procédé mis en œuvre par ordinateur comprenant :

   l'identification d'une entrée (302) comprenant un ou plusieurs modèles d'apprentissage automatique (304) qui comprennent chacun un graphe d'opérateurs ;
   l'exploration du ou des modèles d'apprentissage automatique (304) sur la base d'un ou plusieurs paramètres opérationnels pour déterminer un ou plusieurs candidats à la fusion (306), chacun du ou des candidats à la fusion (306) comprenant un sous-graphe d'au moins un graphe d'opérateurs, chaque sous-graphe incluant deux opérateurs ou plus, et le ou les paramètres opérationnels incluant un ou plusieurs d'une fréquence d'utilisation (332), un coût de calcul (334) et un coût de mémoire (336) ;
   l'extraction d'un ensemble de caractéristiques (307) de chacun du ou des candidats à la fusion (306) ;
   l'utilisation d'un classificateur d'apprentissage automatique pour évaluer le ou les candidats à la fusion (306) sur la base de l'ensemble de caractéristiques (307) extrait de chacun du ou des candidats à la fusion (306) ; et
   l'identification, parmi le ou les candidats à la fusion (306), d'un candidat proposé pour la fusion, sur la base d'une évaluation du ou des candidats à la fusion (306), chaque ensemble de caractéristiques (307) comprenant une ou plusieurs caractéristiques de coeur et une ou plusieurs caractéristiques hors-cœur,
   la ou les caractéristiques de coeur comprenant une ou plusieurs instructions retirées, les tics d'horloge de coeur écoulés, la fréquence du coeur, les présences et absences d'informations dans la mémoire cache L2, et les présences et absences d'informations dans la mémoire cache L3, et
   la ou les caractéristiques hors-cœur comprenant un ou plusieurs octets lus à partir de contrôleurs de mémoire, des octets écrits dans des contrôleurs de mémoire, et du trafic de données transféré via les liaisons d'interconnexion.

2. Procédé mis en œuvre par ordinateur selon la revendication 1, comprenant la combinaison de chaque opérateur du sous-graphe du candidat proposé pour fusionner le candidat proposé en un candidat fusionné.

3. Procédé mis en œuvre par ordinateur selon la revendication 2, comprenant l'évaluation de l'efficacité de calcul d'un premier modèle d'apprentissage automatique avec le candidat proposé et d'un deuxième modèle d'apprentissage automatique avec le candidat fusionné pour valider le candidat proposé.

4. Procédé mis en œuvre par ordinateur selon la revendication 3, comprenant l'utilisation de piles de compilateurs pour évaluer une efficacité de calcul des premier et deuxième modèles d'apprentissage automatique.

5. Procédé mis en œuvre par ordinateur selon la revendication 3, comprenant l'utilisation d'une machine virtuelle tensorielle, TVM, pour évaluer une efficacité de calcul des premier et deuxième modèles d'apprentissage automatique.

6. Procédé mis en œuvre par ordinateur selon la revendication 1, dans lequel le modèle d'apprentissage automatique comprend un modèle de réseau neuronal profond, DNN, et chaque opérateur inclut une couche du modèle DNN.

**7.** Procédé mis en œuvre par ordinateur selon la revendication 1, comprenant un classement de chacun du ou des candidats à la fusion (306) sur la base des ensembles de caractéristiques (307) pour identifier le candidat proposé.

**8.** Procédé mis en œuvre par ordinateur selon la revendication 1, comprenant l'utilisation d'une exploration de sous-graphes fréquents pondérés pour explorer le ou les modèles d'apprentissage automatique (304) sur la base du ou des paramètres opérationnels pour déterminer le ou les candidats à la fusion (306).

**9.** Procédé mis en œuvre par ordinateur selon la revendication 8, comprenant la génération d'une métrique de poids d'arête sur la base du ou des paramètres opérationnels pour explorer le ou les modèles d'apprentissage automatique (304).

**10.** Appareil comprenant des moyens pour exécuter un procédé tel que revendiqué dans l'une quelconque des revendications 1 à 9.

**11.** Stockage lisible par une machine incluant des instructions lisibles par une machine qui, lorsqu'elles sont exécutées par un ordinateur, amènent l'ordinateur à mettre en œuvre le procédé selon l'une quelconque des revendications 1 à 9.

## FIG. 1

*100*

Input 102

Machine learning
models 104

Fusible operator detector (FOD) 105

Fusion candidate(s)
106

Feature set(s)
107

Output 108

Proposed candidate(s)
110

Proposed candidate
feature(s)
112

## FIG. 2

200

Machine learning model 204

Fusion candidate model 214

Fused model 216

Fusion candidate 210

EP 3 918 472 B1

18

**FIG. 3**

300

Input 302

| Machine learning model 304-1 | Machine learning model 304-2 | • • • | Machine learning model 304-n |

FOD 305

Candidate selector 320

Subgraph mining 322

Fusion candidates 306

Candidate filter 326

Feature extraction 328

Feature sets 307

| Frequency 332 | Computation cost 334 | Memory cost 336 |

Operator fusion classifier 338

Output 308

**FIG. 4**

400

| Subgraph candidates 424 | → | Feature extraction 428 | → | Features 430 |
|---|---|---|---|---|

| Fusability analyzer 444 | ← | Fusibility evaluator 442 | ← | Classifier trainer 440 |
|---|---|---|---|---|

**FIG. 5**

<u>500</u>

Output 508

Proposed fusion candidate 510-1

Proposed fusion candidate 510-2

Proposed fusion candidate 510-3

Proposed fusion candidate 510-4

| Frequency 550-1 |
| Computation cost 552-1 |
| Score metric 554-1 |
| Rank 556-1 |

Proposed candidate features 512-1

| Frequency 550-2 |
| Computation cost 552-2 |
| Score metric 554-2 |
| Rank 556-2 |

Proposed candidate features 512-2

| Frequency 550-3 |
| Computation cost 552-3 |
| Score metric 554-3 |
| Rank 556-3 |

Proposed candidate features 512-3

| Frequency 550-4 |
| Computation cost 552-4 |
| Score metric 554-4 |
| Rank 556-4 |

Proposed candidate features 512-4

# FIG. 6

600

Identify input comprising one or more machine learning models that each include a graph of operators
602

Mine the one or more machine learning models based on one or more operational parameters to determine one or more fusion candidates, each of the one or more fusion candidates comprising a subgraph of at least one graph of operators, wherein each subgraph includes two or more operators
604

Extract a feature set from each of the one or more fusion candidates
606

Utilize a machine learning classifier to evaluate the one or more fusion candidates based on the feature sets extracted from each of the one or more fusion candidates
608

Provide, as output, a proposed candidate of the one or more fusion candidates to fuse based on evaluation of the one or more fusion candidates
610

*FIG. 7*

**_Storage Medium 700_**

*Computer Executable
Instructions for 600*

*FIG. 8*

**800**

**FIG. 9**

<u>**900**</u>

CLIENT DATA STORE(S)  SERVER DATA STORE(S)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Feature Mining for Machine Learning Based Compilation Optimization. **LI FENGQIAN et al.** 2014 EIGHTH INTERNATIONAL CONFERENCE ON INNOVATIVE MOBILE AND INTERNET SERVICES IN UBIQUITOUS COMPUTING. IEEE, 02 July 2014

- On optimizing operator fusion plans for large-scale machine learning in system ML. **MATTHIAS BOEHM et al.** PROCEEDINGS OF THE VLDB ENDOWMENT; [ACM DIGITAL LIBRARY. ASSOC. OF COMPUTING MACHINERY, 01 August 2018, vol. 11

- TVM: An Automated End-to-End Optimizing Compiler for Deep Learning. **TIANQI CHEN et al.** ARXIV.ORG:1802.04799V3. Cornell University Library, 05 October 2018